# EUROPEAN PATENT APPLICATION

(11) **EP 4 613 795 A1**
(43) Date of publication of application: **10.09.2025**
(21) Application number: 24162080.6
(22) Date of filing: 07.03.2024
(51) Int. Cl.: C08G 65/336, C08L 71/02

(54) **TIN-FREE COMPOSITIONS CONTAINING SILANE-TERMINATED POLYMERS**

(71) Applicant: Sika Technology AG, 6340 Baar (CH)
(72) Inventor: OBINATA, Takanobu, Hiratsuka, 254-0014 (JP); MATSUDA, Shunta, Hiratsuka, 254-0014 (JP)
(74) Representative: Sika Patent Attorneys

(57) **Abstract**

The invention relates to a tin-free one-component moisture-curable composition, comprising at least one organic polymer containing reactive silane end groups, at least one latent curing catalyst comprising at least one latent amine and at least one latent carboxylic acid, preferably adhesion promoters, plasticizers, fillers and optionally additives.

The one-component moisture curable composition can be formulated to show excellent properties for storage stability and curing speed and is free of tin-based catalysts.

## Description

### Technical field

The invention relates tin-free moisture-curable compositions based on silane-terminated polymer polymers and their use as adhesives and sealants.

### Prior art

Curable compositions based on polymers containing reactive silane groups play an important role in many industrial applications, for example as adhesives, sealants or coatings. Polymers containing reactive silane groups are in particular organic polymers containing reactive silane groups, which are also referred to as "silane-functional polymers", "silane-modified polymers" (SMP) or "silane-terminated polymers" (STP). Compositions containing these polymers harden via crosslinking reaction of the reactive silane groups on the polymers, which hydrolyze under the influence of moisture, condense with one another as silanol groups and thus form a covalently bonded network and, macroscopically, a cured material. Advantages of silane-functional organic polymers commonly are improved adhesive properties and compatibility with substrate materials.

The curing reaction in STP systems is commonly catalyzed by tin-based catalysts or, less commonly, other organometallic catalysts, such as titanates. Sometimes, also a combination of tin catalyst with amines is used. Tin catalysts are preferred because they have a high activity and good compatibility in most formulations. On the other hand, tin catalysts can pose a health threat. Also from a sustainability perspective, tin catalysts should be replaced. Furthermore, the use of tin catalyst is deemed to be regulated more strictly in future, increasing the need to investigate new materials to replace tin catalysts.

Common problems encountered in providing an alternative to tin catalysts are impaired storage stability and slower curing speed. Especially when using amines alone as a catalyst, sufficient reactivity cannot be obtained. Titanium-based catalysts also have drawbacks, as they commonly are less reactive than tin-based catalysts and furthermore tend to produce discolorations in white or transparent products.

There is thus an increasing demand for a curable silane-functional polymer composition that is free of tin-based catalysts. A replacement of tin catalysts should especially show adequate storage stability and curing speed.

### Summary of the invention

It is therefore an object of the present invention to provide a moisture-curable composition based on organic silane-functional polymers that is free of tin-based catalysts.

Surprisingly, it was found that the addition of a latent curing catalyst comprising latent amines and latent carboxylic acids which release the free amines and free carboxylic acids under the influence of moisture, can effectively replace tin catalysts in silane-functional polymer compositions and thus solve the described technical problem.

A composition comprising at least one organic polymer containing reactive silane groups, preferably comprising adhesion promoter, plasticizer and fillers, optionally comprising additives and comprising a latent curing catalyst consisting of at least one latent amine and at least one latent carboxylic acid, shows adequate storage stability and curing speed.

Further aspects of the invention are the subject of further independent claims. Particularly preferred embodiments of the invention are the subject of the dependent claims.

### Ways of executing the invention

The present invention relates in a first aspect to a moisture-curable composition comprising
- at least one organic polymer **P** that containing **P'** moles of reactive silane groups;
- preferably at least one adhesion promoter **AP;**
- preferably at least one plasticizer **PL**;
- preferably at least one filler **F;**
- optionally additives;
- a latent curing catalyst **C** consisting of
   a) at least one latent amine **A** releasing **A**' moles of free amine groups.
   b) at least one latent carboxylic acid **B** releasing **B'** moles of free carboxylic acid groups;

The term "polymer" in the present document includes, on one hand, a collection of macromolecules that are uniform chemically but differ with respect to the degree of polymerization, the molecular weight and the chain length and were synthesized by a polyreaction (polymerization, polyaddition, polycondensation). On the other hand, this term also includes derivatives of such a group of macromolecules of polyreactions, i.e., compounds obtained by reactions, such as additions or substitutions of functional groups on given macromolecules and they may be chemically uniform or chemically heterogeneous. This term also includes so-called prepolymers, i.e., reactive oligomeric pre-adducts, whose functional groups are involved in the synthesis of macromolecules.

The term "organic polymer" encompasses a collective of macromolecules that are chemically homogeneous but differ in relation to degree of polymerization, molar mass and chain length, which has been prepared by a poly reaction (polymerization, polyaddition, polycondensation) and has a majority of carbon atoms in the polymer backbone, and reaction products of such a collective of macromolecules. Polymers having a polyorganosiloxane backbone (commonly referred to as "silicones") are not organic polymers in the context of the present document.

Substance names beginning with "poly", such as polyol or polyisocyanate, refer to substances containing, in a formal sense, two or more of the functional groups that occur in their name per molecule.

The term "radical" is used in this document in a formal sense, meaning a molecular rest bound to an atom by a covalent bond, while the bond is formally "cut" to describe the molecular rest attached to it.

The term "silane" or "organosilane" refers to compounds which on the one hand have at least one, customarily two or three, hydrolyzable groups, preferably alkoxy groups or acyloxy groups, bonded directly to the silicon atom via Si-O bonds, and on the other hand have at least one organic radical bonded directly to the silicon atom via an Si-C bond. Silanes having alkoxy groups or acyloxy groups are also known to the person skilled in the art as organoalkoxy silanes and organoacyloxy silanes, respectively.

Correspondingly, the term "silane group" identifies the silicon-containing group bonded to the organic radical of the silane, which is bonded by the Si-C bond to a compound. The silanes and their silane groups have the property of undergoing hydrolysis in the event of contact with moisture. This produces organosilanols, i.e., silicon-organic compounds containing one or more silanol groups (Si-OH groups) and, through subsequent condensation reactions, organosiloxanes, in other words silicon-organic compounds containing one or more siloxane groups (Si-O-Si groups).

In the present document, the term "reactive silane group" refers to a silyl group that is bonded to an organic radical and has one to three, especially two or three, hydrolyzable substituents or hydroxyl groups on the silicon atom. Particularly useful hydrolyzable substituents are alkoxy groups. These silane groups are also referred to as "alkoxysilane groups". Reactive silane groups may also be in partly or fully hydrolyzed form, for example as silanols.

The term "silane-functional" identifies compounds which have silane groups. "Silane-functional polymers", accordingly, are polymers, more particularly organic polymers, which have at least one, preferably two or more, e.g., two, silane groups. The silane groups may take the form of side groups or, preferably end groups. Silane-functional polymers are also referred to as silane-terminated polymers (STP). γ-silane-functional polymers are polymers in which the Si atom of the silane group is linked to the polymer via a 1,3-propylene bridge.

"Organofunctional compound" refers to a compound that contains a functional group that is bound via a carbon atom. For example, "aminofunctional compound" is a compound having an aminoalkyl group.

"Hydroxysilane", "isocyanatosilane", "aminosilane" and "mercaptosilane" refer respectively to organoalkoxysilanes having one or more hydroxyl, isocyanato, amino or mercapto groups on the organic radical in addition to the silane group.

"Primary amino group" refers to an NH₂ group that is bonded to an organic radical, and "secondary amino group" refers to an NH group that is bonded to two organic radicals which may also together be part of a ring, and "tertiary amino group" refers to an N group that is bonded to three organic radicals, two or three of which together may also be part of one or more rings.

Accordingly, "primary aminosilanes" are aminosilanes comprising a primary amino group and "secondary aminosilanes" are aminosilanes comprising a secondary amino group. The latter also encompasses compounds having both a primary and a secondary amino group.

The term "polyether containing reactive silane groups" also encompasses organic polymers which contain silane groups and which, in addition to polyether units, may also contain urethane groups, urea groups or thiourethane groups or polycarbonates or polyesters. Such polyethers containing reactive silane groups may also be referred to as "polyurethanes containing reactive silane groups".

"Polyoxyalkylene radical" refers to a linear or branched hydrocarbyl radical which contains ether groups and contains more than two repeat units of the (OR) type in succession, where R is a linear or branched alkylene radical, as for example from the polyaddition of ethylene oxide or 1 ,2-propylene oxide onto starter molecules having two active hydrogen atoms.

The term "polyurethane polymer" includes all polymers synthesized by the so-called diisocyanate polyaddition process. This also includes polymers which are almost or entirely free of urethane groups. Examples of polyurethane polymers include polycarbonate polyurethanes, polyether polyurethanes, polyester polyurethanes, polyether polyureas, polyureas, polyester polyureas, polyisocyanurates and polycarbodiimides.

"Monomeric diisocyanate" refers to an organic compound having two isocyanate groups separated by a divalent hydrocarbyl radical having 4 to 15 carbon atoms.

"Plasticizer" refers to nonvolatile substances that are not chemically incorporated into the polymer in the course of curing and that exert a plasticizing effect on the cured polymer.

The compositions comprising the silane-functional polymer are "moisture-curing", meaning that in the presence of water or moisture, more particularly atmospheric moisture the above-described hydrolysis and condensation reactions on the silane groups take place, causing crosslinking of the polymer molecules and curing of the composition. The curing is also referred to as crosslinking.

"Molecular weight" or "MW" is understood in the present document to mean the molar mass (in grams per mole) of a molecule or a molecule residue.

"Average molecular weight" is understood herein to mean the number-average Mₙ of an oligomeric or polymeric mixture of molecules or radicals, which is typically determined by means of gel permeation chromatography (GPC) against polystyrene as standard especially with tetrahydrofuran as mobile phase, refractive index detector and evaluation from 200 g/mol.

"Weight percent" or "percentage by weight", and its abbreviation "wt.-%" refer to the weight percentage of a certain compound in a total composition, if not otherwise defined.

The terms "weight" and "mass" are used interchangeably in this document and refer to the mass as a property of a physical body and commonly measured in kilograms (kg).

The term "molar ratio" in connection with functional groups relates to the ratio of the number of molar equivalents of the corresponding functional groups.

The term "mass ratio" relates to the ratio of the masses of two components.

"Storage-stable" or "storable" refers to a substance or composition when it can be stored at room temperature in a suitable container over a prolonged period, typically at least 3 months up to 6 months or more, without any change in its application or use properties, especially in the viscosity and crosslinking rate, to a degree of relevance for the use thereof as a result of the storage.

A dotted or dashed line in the formulae in this document in each case represents the bond between a substituent and the corresponding molecular radical.

"Room temperature" refers here to a temperature of 23°C.

The term "standard climatic conditions" refers to a temperature of 23±1 °C and a relative air humidity of 50±5%.

All industrial standards and norms cited in this document refer to the respective edition in force on the time of filing of the first application of this invention, if not otherwise defined.

The composition according to the invention contains at least one organic polymer **P** containing reactive silane groups.

Processes for preparing organic polymers containing reactive silane groups are known to the person skilled in the art.

In a preferred process, organic polymers containing reactive silane groups are obtainable from the reaction of organic polymers containing allyl groups with hydrosilanes, optionally with chain extension using, for example, diisocyanates. In a further preferred process, polyethers containing reactive silane groups are obtainable from the copolymerization of alkylene oxides and epoxysilanes, optionally with chain extension using, for example, diisocyanates.

In a further preferred process, organic polymers containing reactive silane groups are obtainable from the reaction of organic polyols with isocyanatosilanes, optionally with chain extension using diisocyanates.

In a further preferred process, polyethers containing reactive silane groups are obtainable from the reaction of organic polymers containing isocyanate groups, especially NCO-terminated urethane polymers from the reaction of polyols with a superstoichiometric amount of polyisocyanates, with aminosilanes, hydroxysilanes or mercaptosilanes. This process enables the use of a multitude of inexpensive starting materials of good commercial availability, by means of which it is possible to obtain different polymer properties, for example high extensibility, high strength, low modulus of elasticity, low glass transition point or high weathering resistance.

The organic polymer **P** containing P' moles of reactive silane groups preferably has terminal silane groups of formula (I) 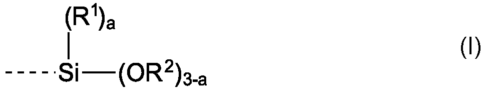 wherein
R¹ represents a linear or branched, monovalent hydrocarbon radical having 1 to 8 carbon atoms and which optionally contains one or more C-C multiple bonds, and/or cycloaliphatic moieties, and/or aromatic moieties;
R² represents a linear or branched, monovalent hydrocarbon radical having 1 to 5 carbon atoms and which optionally contains one or more C-C multiple bonds, and/or cycloaliphatic moieties, and/or aromatic moieties;

Preferably, R¹ is methyl or ethyl.

Preferably, R² is methyl or ethyl or isopropyl.

Preferably, a is 0 or 1, especially 0.

Aside from the silane groups of formula (I), the organic polymer **P** preferably has no further silane groups that do not correspond to the formula (I). In particular, it has no isocyanate groups attached directly to the polyether polyol via an isocyanatosilane. Such silane groups attached via isocyanatosilane decrease strength and thermal stability after curing.

Preferably, the organic polymer **P** has an average of 1.5 to 4, more preferably 1.8 to 3.4, most preferably 2 to 3, silane groups per molecule.

Preferably, the organic polymer **P** has an average molecular weight Mₙ within a range from 5000 to 30 000 g/mol, preferably 6000 to 20 000 g/mol, especially 7000 to 15 000 g/mol.

Preferably, the organic polymer **P** containing reactive terminal silane groups is derived from an intermediate polymer containing isocyanate groups which is reacted with an organoalkoxysilane having an isocyanate-reactive organic group such as an amino-, mercapto-, or hydroxy group.

The intermediate polymer containing isocyanate groups is obtainable by the reaction of at least one polyol with at least one polyisocyanate, more particularly a monomeric diisocyanate, resulting in a polyurethane polymer containing free isocyanate groups. This reaction may be accomplished by bringing the polyol and the polyisocyanate to reaction with customary methods, as for example from temperatures of 40°C to 160°C, optionally with accompanying use of suitable catalysts, the polyisocyanate being metered such that these isocyanate groups are in a stochiometric excess in relation to the hydroxyl groups of the polyol.

In the reaction, the OH groups of the polyether polyol react with the isocyanate groups of the monomeric diisocyanate. This results also in what are called chain extension reactions, in that there is reaction of OH groups and/or isocyanate groups of products of the reaction between polyol and monomeric diisocyanate. The higher the molar NCO/OH ratio chosen, the lower the level of chain extension reactions that takes place, and the lower the polydispersity of the polymer obtained. A measure of the chain extension reaction is the average molecular weight of the polymer, or the width and distribution of the peaks in the GPC analysis. A further measure is the effective NCO content of the polymer freed of monomers relative to the theoretical NCO content calculated from the reaction of every OH group with a monomeric diisocyanate.

The excess of polyisocyanate is selected in particular such that the amount of free isocyanate groups present in the resulting intermediate polymer after the reaction of all of the hydroxyl groups of the polyol is from 0.1 to 5 wt.-%, preferably 0.1 to 2.5 wt.-%, more preferably 0.2 to 1 wt.-%, based on the overall polymer.

Preferred polyurethane polymers are those having the stated amount of free isocyanate groups and obtained from the reaction of diisocyanates with high molecular mass diols in an NCO:OH ratio of 1.5:1 to 2.2:1.

Suitable monomeric diisocyanates are commercial aromatic or aliphatic diisocyanates, especially diphenylmethane 4,4'-diisocyanate, optionally containing proportions of diphenylmethane 2,4'- and/or 2,2'-diisocyanate (MDI), tolylene 2,4-diisocyanate or mixtures thereof with tolylene 2,6-diisocyanate (TDI), phenylene 1,4-diisocyanate (PDI), naphthalene 1,5-diisocyanate (NDI), hexane 1,6-diisocyanate (HDI), 2,2(4),4-trimethylhexamethylene 1,6-diisocyanate (TMDI), cyclohexane 1,3- or 1,4-diisocyanate, 1-isocyanato-3,3,5-trimethyl-5-isocyanatomethylcyclohexane (isophorone diisocyanate or IPDI), perhydro-diphenylmethane 2,4'- or 4,4'-diisocyanate (HMDI), 1,3- or 1,4-bis(isocyanatomethyl)cyclohexane, m- or p-xylylene diisocyanate (XDI), m-tetramethylxylylene diisocyanate (TMXDI), or mixtures thereof.

More preferably, the monomeric diisocyanate is selected from the group consisting of MDI, TDI, HDI and IPDI, in particular MDI and IPDI.

Suitable polyols for preparing the intermediate polyurethane polymer are, in particular, polyether polyols, polyester polyols, and polycarbonate polyols, and also mixtures of these polyols. Particularly suitable are polyoxyethylene polyols and polyoxypropylene polyols, more particularly polyoxyethylene diols, polyoxypropylene diols, polyoxyethylene triols, and polyoxypropylene triols.

Thus, the backbone of the organic polymer **P** is preferably a polycarbonate, a polyester or a polyether, in particular a polyoxyethylene, polyoxypropylene or polyoxy-propylenepolyoxyethylene, a polyurethane, a poly(meth)acrylate or a polybutadiene.

Especially suitable are polyoxyalkylene diols or polyoxyalkylene triols having a degree of unsaturation of less than 0.02 meq/g and having an average molecular weight in the range from 1'000 to 30'000 g/mol, and also polyoxyethylene diols, polyoxyethylene triols, polyoxypropylene diols, and polyoxypropylene triols having an average molecular weight of 400 to 20'000 g/mol. Likewise particularly suitable are so-called ethylene oxide-terminated ("EO-endcapped", ethylene oxide-endcapped) polyoxypropylene polyols.

These stated polyols preferably have an average molecular weight of 250 to 30'000 g/mol, more particularly of 1'000 to 20'000 g/mol, and an average OH functionality in the range from 1.6 to 3.

The intermediate polymer containing isocyanate groups is highly storage-stable with exclusion of moisture.

The intermediate polymer containing isocyanate groups from which the organic polymer **P** is derived, is reacted with an organoalkoxysilane, preferably with at least one amino-, mercapto- or hydroxysilane which affords the organic polymer **P** containing reactive terminal silane groups.

The amino-, mercapto- or hydroxysilane for the reaction with the intermediate polymer containing isocyanate groups is preferably an organoalkoxysilane of formula (II). 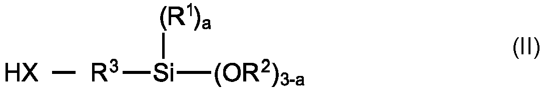 wherein
R¹ represents a linear or branched, monovalent hydrocarbon radical having 1 to 8 carbon atoms and which optionally contains one or more C-C multiple bonds, and/or cycloaliphatic moieties, and/or aromatic moieties;
R² represents a linear or branched, monovalent hydrocarbon radical having 1 to 5 carbon atoms and which optionally contains one or more C-C multiple bonds, and/or cycloaliphatic moieties, and/or aromatic moieties;
R³ represents a divalent hydrocarbyl radical having 1 to 12 carbon atoms that optionally has cyclic and/or aromatic moieties and optionally one or more heteroatoms, especially an amido, carbamate or morpholino group;
X is O, S or NR⁴ where R⁴ is H or a monovalent hydrocarbyl radical having 1 to 20 carbon atoms that optionally has heteroatoms in the form of alkoxysilyl, ether or carboxylic ester groups;

Preferably, R¹ is methyl or ethyl.

Preferably, R² is methyl or ethyl or isopropyl.

Preferably, a is 0 or 1, especially 0.

Preferred organoalkoxysilanes of formula (II) are selected from the group consisting of 3-aminopropyltrimethoxysilane, 3-aminopropyldimethoxymethylsilane, 4-aminobutyltrimethoxysilane, 4-amino-3-methylbutyltrimethoxysilane, 4-amino-3,3-dimethylbutyltrimethoxysilane, N-ethyl-3-amino-(2-methylpropyl)trimethoxysilane, N-butyl-3-aminopropyltrimethoxysilane, N-phenyl-3-aminopropyltrimethoxysilane, diethyl N-(3-trimethoxysilylpropyl)aminosuccinate, diethyl N-(3-dimethoxymethylsilylpropyl)aminosuccinate, 3-mercaptopropyltrimethoxysilane, 3-mercaptopropyldimethoxymethylsilane, N-(3-trimethoxysilylpropyl)-2-hydroxypropanamide, N-(3-trimethoxysilylpropyl)-4-hydroxypentanamide, N-(3-trimethoxysilylpropyl)-4-hydroxyoctanamide, N-(3-trimethoxysilylpropyl)-5-hydroxydecanamide, N-(3-trimethoxysilylpropyl)-2-hydroxypropyl carbamate, 2-morpholino-4(5)-(2-trimethoxysilylethyl)cyclohexan-1 -ol, 2-morpholino-4(5)-(2-trimethoxysilylethyl)cyclohexan-1-ol, 1-morpholino-3-(3-(triethoxysilyl)propoxy)propan-2-ol, and the corresponding analogs with ethoxy groups in place of the methoxy groups on the silicon.

A particularly preferred organoalkoxysilane of formula (II) is diethyl N-(3-trimethoxysilylpropyl)aminosuccinate, diethyl N-(3-triethoxysilylpropyl)aminosuccinate, diethyl N-(3-dimethoxymethylsilylpropyl)aminosuccinate, diethyl N-(3-diethoxymethylsilylpropyl)aminosuccinate, N-(3-trimethoxysilylpropyl)-2-hydroxypropanamide, N-(3-triethoxysilylpropyl)-2-hydroxypropanamide, N-(3-dimethoxymethylsilylpropyl)-2-hydroxypropanamide or N-(3-diethoxymethylsilylpropyl)-2-hydroxypropanamide.

A very particularly preferred organoalkoxysilane of formula (II) is diethyl N-(3-trimethoxysilylpropyl)aminosuccinate, diethyl N-(3-triethoxysilylpropyl)aminosuccinate, diethyl N-(3-dimethoxymethylsilylpropyl)aminosuccinate or diethyl N-(3-diethoxymethylsilylpropyl)aminosuccinate.

The reaction is carried out at a temperature within a range from 20 to 160°C, especially 60 to 120°C. A catalyst is optionally used here, especially a tertiary amine or a metal compound, especially a bismuth(III), zinc(II), zirconium(IV) or tin(II) compound or an organotin(IV) compound.

The organic polymer **P** containing reactive terminal silane groups is storage-stable with exclusion of moisture.

The composition according to the invention contains at least one latent curing catalyst **C** that consists of at least one latent amine **A** and at least one latent carboxylic acid **B.**

Under the influence of moisture or contact with water or any other hydrolyzing agent, the latent amine **A** releases **A'** moles of free amine.

Similarly, Under the influence of moisture or contact with water or any other hydrolyzing agent, the latent carboxylic acid **B** releases **B'** moles of free carboxylic acid.

The free amine and carboxylic acid then act as the active catalyst promoting the curing reaction.

In preferred embodiments the molar ratio of **A':P'** ranges from 0.5:1 to 10:1 and the molar ratio of **B':P'** ranges from 0.5:1 to 10:1.

In preferred embodiments, the composition comprises 0.5 to 100 parts by weight of said catalyst **C** per 100 parts by weight of polymer **P.**

The latent amine **A** preferably contains structural units of formula (III) 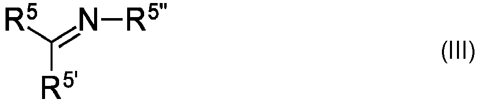 wherein
R⁵ represents a linear or branched or cyclic, monovalent hydrocarbon radical having 1 to 18 carbon atoms that optionally has cycloaliphatic and/or aromatic moieties and optionally one or more C-C multiple bonds and one or more heteroatoms, especially a carboxylic ester group and/or morpholine group; R^{5'} represents a linear or branched or cyclic, monovalent hydrocarbon radical having 1 to 5 carbon atoms that optionally has cycloaliphatic and/or aromatic moieties and optionally one or more C-C multiple bonds and one or more heteroatoms, preferably CH₃ or H, especially H;
R^{5"} represents a linear or branched or cyclic, monovalent hydrocarbon radical having 1 to 25 carbon atoms that optionally has cycloaliphatic and/or aromatic moieties and optionally one or more C-C multiple bonds and one or more heteroatoms and optionally carries one or more additional imine groups.

The latent amine **A** is preferably prepared by reacting a suitable aldehyde or ketone with a suitable amine in an imine formation reaction according to the state of the art with acid-catalyzed dehydration as for example described in Houben-Weyl *"Methoden der organischen Chemie", Vol. X1*/*2, p. 732 ff.* The aldehyde or ketone is used in relation to the amino groups of the amine stoichiometrically or in stoichiometric excess. Usually, such condensation reactions are carried out in the presence of a solvent, by means of which the water formed during the reaction is removed azeotropically. For the preparation of the latent amine **A** according to the invention according to the invention, however, a manufacturing process without the use of solvents is preferred, wherein the water formed during the condensation is removed directly from the reaction mixture by means of a vacuum. Due to the solvent-free production eliminates the need to distil off the solvent after production, which simplifies the production process. In addition, the latent amine is free of solvent residues, which could cause an unpleasant odor.

Suitable amines for preparing the latent amine **A** are customary polyamines such as are used, for example, in polyurethane or epoxy chemistry. Examples that may be mentioned include the following: aliphatic polyamines such as ethylenediamine, 1,2- and 1,3-propanediamine, 2-methyl-1,2-propanediamine, 2,2-dimethyl-1,3-propanediamine, 1,3- and 1,4-butanediamine, 1,3- and 1,5-pentanediamine, 1,6-hexanediamine, 2,2,4- and 2,4,4-trimethylhexamethylenediamine and mixtures thereof, 1,7-heptanediamine, 1,8-octanediamine, 4-aminomethyl-1,8-octanediamine, 1,9-nonanediamine, 1,10-decanediamine, 1,11-undecanediamine, 1,12-dodecanediamine, methylbis(3-aminopropyl)amine, 1,5-diamino-2-methylpentane (MPMD), 1,3-diaminopentane (DAMP), 2,5-dimethyl-1,6-hexamethylenediamine, cycloaliphatic polyamines such as 1,2-, 1,3- and 1,4-diaminocyclohexane, bis(4-aminocyclohexyl)methane, bis(4-amino-3-methylcyclohexyl)methane, bis(4-amino-3-ethylcyclohexyl)methane, bis(4-amino-3,5-dimethylcyclohexyl)methane, 1-amino-3-aminomethyl-3,5,5-trimethylcyclohexane (IPDA), 2- and 4-methyl-1,3-diaminocyclohexane and mixtures thereof, 1,3- and 1,4-bis(aminomethyl)cyclohexane, 1-cyclohexylamino-3-aminopropane, 2,5(2,6)-bis(aminomethyl)-bicyclo[2.2.1]heptane (NBDA, manufactured by Mitsui Chemicals), 3(4),8(9)-bis(aminomethyl)tricyclo[5.2.1.0^{2,6}]decane, 1,4-diamino-2,2,6-trimethylcyclohexane (TMCDA), 3,9-bis(3-aminopropyl)-2,4,8,10-tetraoxaspiro[5.5]undecane, 1,3- and 1,4-xylylenediamine, aliphatic polyamines containing ether groups, such as bis(2-aminoethyl)ether, 4,7-dioxadecane-1,10-diamine, 4,9-dioxa-dodecane-1,12-diamine and higher oligomers thereof, polyoxyalkylene-polyamines having in theory two or three amino groups, obtainable for example under the name Jeffamine^{®} (manufactured by Huntsman Chemicals), and also mixtures of the aforementioned polyamines.

Preferably, the latent amine is a mono-imine, di-imine or tri-imine

Preferably, the imine is an aldimine or ketimine.

The latent amine **A** is preferably a mono-imine of formula (Illa) 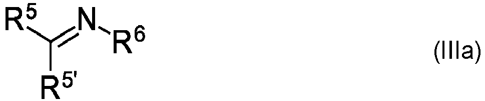 wherein
R⁵ represents a linear or branched or cyclic, monovalent hydrocarbon radical having 1 to 18 carbon atoms that optionally has cycloaliphatic and/or aromatic moieties and optionally one or more C-C multiple bonds and one or more heteroatoms, especially a carboxylic ester group and/or morpholine group;
R^{5'} represents a hydrogen or a linear or branched or cyclic, monovalent hydrocarbon radical having 1 to 5 carbon atoms that optionally has cycloaliphatic and/or aromatic moieties and optionally one or more C-C multiple bonds and one or more heteroatoms;
R⁶ represents a hydrogen or a linear or branched or cyclic, monovalent hydrocarbon radical having 1 to 20 carbon atoms that optionally has cycloaliphatic and/or aromatic moieties and optionally one or more C-C multiple bonds and one or more heteroatoms.

Preferred mono-imines of formula (Illa) are derived from primary mono-amines, such as octadecylamine (stearamine).

The latent amine **A** is preferably an di-imine of formula (Illb) 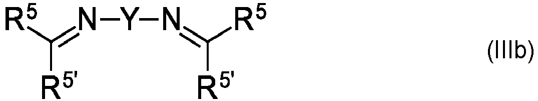 wherein
R⁵ represents a linear or branched or cyclic, monovalent hydrocarbon radical having 1 to 18 carbon atoms that optionally has cycloaliphatic and/or aromatic moieties and optionally one or more C-C multiple bonds and one or more heteroatoms, especially a carboxylic ester group and/or morpholine group;
R^{5'} represents a hydrogen or a linear or branched or cyclic, monovalent hydrocarbon radical having 1 to 5 carbon atoms that optionally has cycloaliphatic and/or aromatic moieties and optionally one or more C-C multiple bonds and one or more heteroatoms;
Y represents a linear or branched or cyclic, monovalent hydrocarbon radical having 1 to 12 carbon atoms that optionally has cycloaliphatic and/or aromatic moieties and optionally one or more C-C multiple bonds and one or more heteroatoms.

Preferred di-imines of formula (IIIb) are derived from polyamines, such as isophorene diamine (IPDA) or 1,6-hexamethylenediamine (HDA), 2-methylpentane-1,5-diamine (MPMD), 4-dimethylaminopyridine (DAMP), 2,2,4- and 2,4,4-trimethylhexamethylenediamine (TMD), 1,3- and 1,4-xylylenediamine, 1,3- and 1,4-bis(aminomethyl)cyclohexane, bis(4-aminocyclohexyl)methane, bis(4-amino-3-methylcyclohexyl)methane, 3(4),8(9)-bis(aminomethyl)tricyclo[5.2.1.0^{2,6}]decane, 1,2-, 1,3- and 1,4-diaminocyclohexane, and polyoxyalkylene polyamines having in theory two amino groups, especially Jeffamine^{®} EDR-148, Jeffamine^{®} D-230, Jeffamine^{®} D-400 and, in particular, mixtures of two or more of the aforementioned polyamines.

The latent amine **A** is preferably a tri-imine of formula (IIIc) 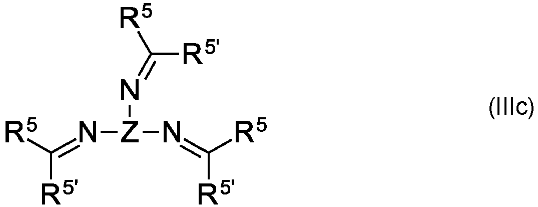 wherein
R⁵ represents a linear or branched or cyclic, monovalent hydrocarbon radical having 1 to 18 carbon atoms that optionally has cycloaliphatic and/or aromatic moieties and optionally one or more C-C multiple bonds and one or more heteroatoms, especially a carboxylic ester group and/or morpholine group;
R^{5'} represents a hydrogen or a linear or branched or cyclic, monovalent hydrocarbon radical having 1 to 5 carbon atoms that optionally has cycloaliphatic and/or aromatic moieties and optionally one or more C-C multiple bonds and one or more heteroatoms;
Z represents a linear or branched or cyclic, monovalent hydrocarbon radical having 1 to 25 carbon atoms that optionally has cycloaliphatic and/or aromatic moieties and optionally one or more C-C multiple bonds and one or more heteroatoms

Other preferred imines of formula (IIIc) are derived from polyamines, such as 4-aminomethyl-1,8-octanediamine and polyoxyalkylene polyamines having in theory three amino groups, especially, Jeffamine^{®} T-403, and, in particular, mixtures of the aforementioned polyamines.

Preferred imines of formula (III) and (Illa-c) respectively, are derived from aldehydes, preferably aldehydes which are derived from saturated fatty acids and their corresponding carboxylic acid esters, preferably from lauric acid and stearic acid or aldehydes which contain morpholine or morpholine-derivatives such as 2,2-dimethyl-3-morpholin-4-ylpropanal.

Preferred imines of formula (III) and (Illa-c) respectively, are derived from ketones, preferably ketones such as 4-methyl-2-pentanone.

The latent amine **A** according to formula (III) and (Illa-c) respectively, releases **A'** moles of free amine under the influence of moisture, i.e. the imine is hydrolyzed and thus converted to an aldehyde or ketone and said free amine. While the free amine promotes the curing reaction, the produced aldehyde is not adversely affecting the subsequent curing reaction.

The latent amine **A** is preferably an oxazolidine of formula (IV) 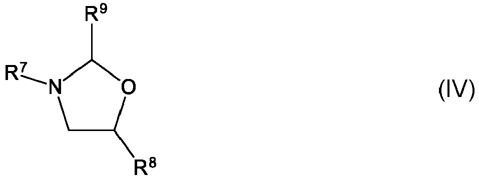 Wherein
R⁷ represents a linear or branched or cyclic, monovalent hydrocarbon radical having 1 to 12 carbon atoms that optionally has cycloaliphatic and/or aromatic moieties and optionally one or more C-C multiple bonds and/or one or more heteroatoms such as O, S or N and/or one or more functional groups such as urethane groups, urea groups, thiourethane groups or polycarbonates or polyester, especially methyl, methylol, ethyl, ethylol, n-propyl, n-butyl, n-hexyl, cyclohexyl, 2-ethylhexyl or benzyl and optionally carries one or more additional oxazolidine groups;
R⁸ represents a hydrogen;
R⁹ represents a linear or branched or cyclic, monovalent hydrocarbon radical having 1 to 12 carbon atoms that optionally has cycloaliphatic and/or aromatic moieties and optionally one or more C-C multiple bonds and one or more heteroatoms, especially H, methyl, ethyl, n-propyl, n-butyl, n-hexyl, cyclohexyl, 2-ethylhexyl, benzyl, furan-2-yl, 1,3-benzodioxol-5-yl or 1-naphthyl.

The formation of oxazolidines is done according to the state of the art and as described as for example in JP2016145320*.*

Examples of the oxazolidine compound include urethane bond-containing oxazolidine compounds, ester group-containing oxazolidine compounds, and carbonate group-containing oxazolidine compounds. These oxazolidine compounds are obtained by reacting the hydroxyl group of a compound having a hydroxyl group and an oxazolidine ring with an isocyanate group of an organic polyisocyanate compound or a carboxyl group of an organic carboxylic acid compound.

Specific examples of the compound having a hydroxyl group and an oxazolidine ring include N-hydroxyalkyl oxazolidine obtained by a dehydration condensation reaction between a secondary amino group of an alkanolamine and a carbonyl group of a ketone compound or an aldehyde compound. An example of the method for producing a compound having a hydroxyl group and an oxazolidine ring includes a dehydration condensation reaction between 1 mol or more, preferably 1 to 1.5 mol, more preferably 1 to 1.2 mol of a carbonyl group of an aldehyde compound or ketone compound and 1 mol of a secondary amino group of an alkanolamine by heating and refluxing them in a solvent such as toluene or xylene and then removing by-product water. Excess aldehyde compounds and ketone compounds may be removed by distillation.

Examples of alkanolamines include diethanolamine, dipropanolamine, and N-(2-hydroxyethyl)-N-(2-hydroxypropyl)amine. Examples of the ketone compound include acetone, diethyl ketone, isopropyl ketone, methyl ethyl ketone, methyl propyl ketone, methyl isopropyl ketone, methyl butyl ketone, methyl isobutyl ketone, methyl-tert-butyl ketone, diisobutyl ketone, cyclopentanone, and cyclohexanone. Examples of aldehyde compounds include acetaldehyde, propionaldehyde, n-butyraldehyde, isobutyraldehyde, valeraldehyde, isovaleraldehyde, 2-methylbutyraldehyde, n-hexylaldehyde, 2-methylpentylaldehyde, n-octylaldehyde, 3,5 , 5-trimethylhexylaldehyde; and aromatic aldehyde compounds such as benzaldehyde, methylbenzaldehyde, trimethylbenzaldehyde, ethylbenzaldehyde, isopropylbenzaldehyde, isobutylbenzaldehyde, methoxybenzaldehyde, dimethoxybenzaldehyde, and trimethoxybenzaldehyde. Any of these can be used alone or in combination of two or more.

Preferred examples of the urethane bond-containing oxazolidine compound include those obtained by reacting an isocyanate group of an organic polyisocyanate compound with a hydroxyl group of a compound having an oxazolidine ring and a hydroxyl group in a molar ratio of the isocyanate group/hydroxyl group of 0.9:1 to 1.2:1, preferably 0.95:1 to 1.05:1 at a temperature of 50 to 120°C in the presence or absence of an organic solvent.

Preferred examples of the organic polyisocyanate compound used in the production of the urethane bond-containing oxazolidine compound include aromatic aliphatic polyisocyanates and aliphatic polyisocyanates because they can reduce the crystallinity of the urethane bond-containing oxazolidine compound and improve the workability of the composition. Xylylene diisocyanate (XDI) and hexamethylene diisocyanate (HDI) are particularly preferred.

The ester group-containing oxazolidine compound can be obtained by reacting the above-mentioned compound having a hydroxyl group and an oxazolidine ring with a lower alkyl ester of a dicarboxylic acid or a polycarboxylic acid.

The oxazolidine compounds can be used alone or in combination of two or more.

The latent amine **A** according to formula (IV) releases **A'** moles of free amine under the influence of moisture, i.e. the oxazolidine is hydrolyzed and thus converted to an aldehyde or ketone and the free amine, in this case an alkanolamine. While the free amine promotes the curing reaction, the produced aldehyde is not adversely affecting the subsequent curing reaction.

The latent carboxylic acid **B** is preferably a carboxylic acid silyl ester according to formula (V). 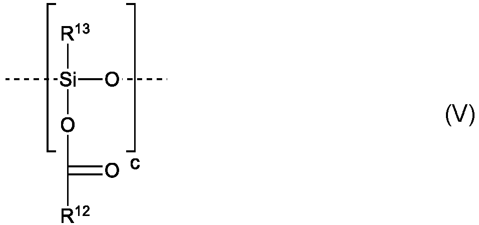 Wherein
R¹² represents an a linear or branched, monovalent hydrocarbon radical having 1 to 25 carbon atoms, preferably 13 to 21 carbon atoms, preferably 13 to 17 carbon atoms and/or cycloaliphatic moieties, and/or aromatic moieties, and optionally one or more heteroatoms, examples include phenyl, tolyl, benzyl, and styryl, n-tridecyl, n-tetradecyl, n-pentadecyl, n-hexadecyl, n-heptadecyl, n-octadecyl, n-pentyl, 1-methylbutyl, 2-methylbutyl, 3-methylbutyl group, tert-pentyl., neopentyl, n-hexyl, 1-methylpentyl, 2-methylpentyl, 3-methylpentyl, 4-methylpentyl, 1-ethylbutyl, 2-ethylbutyl, 3-ethylbutyl, 2-dimethylbutyl, 3,3-dimethylbutyl, 2,3-dimethylbutyl, n-heptyl, 1-methylhexyl, 2-methylhexyl, 3-methylhexyl, 4 -methylhexyl, 5-methylhexyl, 1-ethylpentyl, 2,2-dimethylpentyl, 3,3-dimethylpentyl, 2,3-dimethylpentyl, 2,4-dimethylpentyl, 2-ethylpentyl, 3-ethylpentyl, 2,2,3-trimethylbutyl, n-octyl, n-nonyl, n-undecyl, 1-ethylpentyl, preferably n-undecyl.
R¹³ represents a hydrogen atom or a linear monovalent hydrocarbon radical having 1 to 8 carbon atoms, preferably 1 to 5 carbon atoms and/or cycloaliphatic moieties, and/or aromatic moieties, and optionally one or more heteroatoms, examples include phenyl, tolyl, benzyl, styryl, methyl, ethyl, n-propyl, n-butyl and n-octyl, preferably phenyl and methyl.

The latent carboxylic acid **B** is particularly a polysiloxane according to formula (Va) 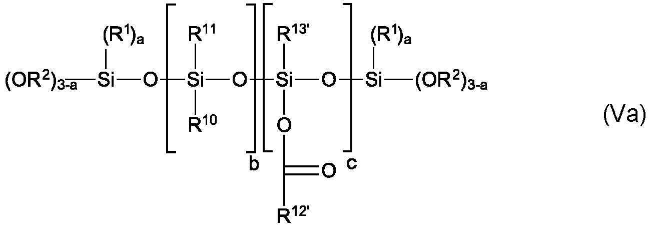 wherein
R¹ represents a linear or branched, monovalent hydrocarbon radical having 1 to 8 carbon atoms and which optionally contains one or more C-C multiple bonds, and/or cycloaliphatic moieties, and/or aromatic moieties, especially a methyl or ethyl group;
R² represents a linear or branched, monovalent hydrocarbon radical having 1 to 5 carbon atoms and which optionally contains one or more C-C multiple bonds, and/or cycloaliphatic moieties, and/or aromatic moieties, especially a methyl or ethyl or isopropyl group;
R¹⁰ represents a linear or branched, monovalent hydrocarbon radical or a polycarbonate, polyester or polyether chain and which optionally contains one or more C-C multiple bonds, and/or cycloaliphatic moieties, and/or aromatic moieties, and optionally one or more heteroatoms, preferably ether oxygens, especially a polyether or methyl group;
R¹¹ represents a linear monovalent hydrocarbon radical having 1 to 5 carbon atoms, preferably a methyl group;
R^{12'} represents an a linear or branched, monovalent hydrocarbon radical having 1 to 25 carbon atoms, preferably 13 to 21 carbon atoms, preferably 13 to 17 carbon atoms and/or cycloaliphatic moieties, and/or aromatic moieties, and optionally one or more heteroatoms, examples include phenyl, tolyl, benzyl, and styryl, n-tridecyl, n-tetradecyl, n-pentadecyl, n-hexadecyl, n-heptadecyl, n-octadecyl, n-pentyl, 1-methylbutyl, 2-methylbutyl, 3-methylbutyl group, tert-pentyl., neopentyl, n-hexyl, 1-methylpentyl, 2-methylpentyl, 3-methylpentyl, 4-methylpentyl, 1-ethylbutyl, 2-ethylbutyl, 3-ethylbutyl, 2-dimethylbutyl, 3,3-dimethylbutyl, 2,3-dimethylbutyl, n-heptyl, 1-methylhexyl, 2-methylhexyl, 3-methylhexyl, 4 -methylhexyl, 5-methylhexyl, 1-ethylpentyl, 2,2-dimethylpentyl, 3,3-dimethylpentyl, 2,3-dimethylpentyl, 2,4-dimethylpentyl, 2-ethylpentyl, 3-ethylpentyl, 2,2,3-trimethylbutyl, n-octyl, n-nonyl, n-undecyl, 1-ethylpentyl, preferably n-undecyl.
R^{13'} represents a hydrogen atom or a linear monovalent hydrocarbon radical having 1 to 8 carbon atoms, preferably 1 to 5 carbon atoms and/or cycloaliphatic moieties, and/or aromatic moieties, and optionally one or more heteroatoms, examples include phenyl, tolyl, benzyl, and styryl; methyl, ethyl, n-propyl, n-butyl and n-octyl, preferably phenyl and methyl.
a has a value of 3;
b has a value of 0 to 5, preferably 0 to 2;
c has a value of 1 to 40.

The latent carboxylic acid **B** is preferably prepared by reacting a Si-H group containing polysiloxane with a carboxylic acid to form a silyl ester group. Optionally, allyl group-terminated polyether can be incorporated as well to act as compatibilizer in the latent carboxylic acid **B.** The formation of **B** is done according to the state of the art and for example described in JP48788880B2*.*

The latent carboxylic acid **B** according to formula (V) releases **B'** moles of free carboxylic acid under the influence of moisture, i.e. the polysiloxane containing the silyl ester is hydrolyzed and thus converted to an Si-OH group containing polysiloxane and said free carboxylic acid. While the free carboxylic acid promotes the curing reaction, the produced Si-OH group containing polysiloxane is not adversely affecting the subsequent curing reaction.

The moisture-curable composition according to the present invention furthermore preferably comprises between 0.1 and 2.5 wt.-%, based on the total composition, organosilanes or oligomers of organosilanes, in particular monomeric or oligomeric organofunctional alkoxysilanes.

The moisture-curable composition according to the present invention furthermore consists of organosilanes. Organosilanes have various advantages. For example, they may act as desciccant or drying agent or have co-catalytic activity, in particular aminosilanes such as 3-aminopropyl trimethoxysilane, and/or they act as adhesion promotors **AP,** such as 3-glycidoxypropyl trimethoxysilane.

In preferred embodiments, the composition comprises 1 to 10 parts by weight of at least one adhesion promoter **AP** per 100 parts by weight of organic polymer **P.** Nevertheless, in some embodiments the composition does not contain adhesion-promoting silanes, such as amino silanes or glycidoxy silanes. A composition free of adhesion-promoting silanes, in particular amino-functional and/or glycidoxy-functional silanes, has the advantage that the composition may be easily removed from the substrate when the object bonded with the composition needs to be disassembled, for example during a battery replacement operation.

Preferred organosilanes acting, for example, as adhesion promoters **AP** and/or crosslinkers are in particular aminosilanes, mercaptosilanes, epoxysilanes, (meth)acryloylsilanes, anhydridosilanes, carbamatosilanes, alkylsilanes or iminosilanes, oligomeric forms of these silanes, adducts formed from primary aminosilanes with epoxysilanes or (meth)acryloylsilanes or anhydridosilanes, amino-functional alkylsilsesquioxanes, 3-glycidoxypropyltrimethoxysilane, 3-glycidoxypropyltriethoxysilane or 3-ureidopropyltrimethoxysilane, or oligomeric forms of these silanes.

Preferred organosilanes acting as desiccants or drying agents are in particular tetraethoxysilane, vinyltrimethoxysilane, vinyltriethoxysilane or organoalkoxysilanes having a functional group in the α-position to the silane group, especially N-(methyldimethoxysilylmethyl)-O-methylcarbamate, (methacryloyloxymethyl)silanes, and methoxymethylsilanes.

Preferred organosilanes acting as co-catalysts are in particular aminosilanes.

The organosilanes preferably comprised in the composition may be monomeric organosilanes or oligomeric organosilanes.

Examples of suitable monomeric organosilanes, especially acting as adhesion promoter **AP,** are showin in formula (II) 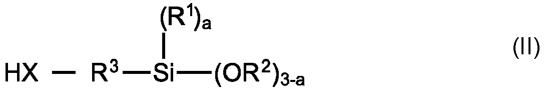 wherein
R¹ represents a linear or branched, monovalent hydrocarbon radical having 1 to 8 carbon atoms and which optionally contains one or more C-C multiple bonds, and/or cycloaliphatic moieties, and/or aromatic moieties, especially a methyl or ethyl group;
R² represents a linear or branched, monovalent hydrocarbon radical having 1 to 5 carbon atoms and which optionally contains one or more C-C multiple bonds, and/or cycloaliphatic moieties, and/or aromatic moieties, especially a methyl or ethyl or isopropyl group;
R³ represents a divalent hydrocarbyl radical having 1 to 12 carbon atoms that optionally has cycloaliphatic and/or aromatic moieties and optionally one or more heteroatoms and optionally one or more C-C multiple bonds, especially an amido, carbamate or morpholino group;
X is O, S or NR⁴ where R⁴ is H or a monovalent hydrocarbyl radical having 1 to 20 carbon atoms that optionally has heteroatoms in the form of alkoxysilyl, ether or carboxylic ester groups;
a has a value of 0 or 1 or 2, especially 0.

The composition according to the present invention preferably comprises 80 to 120 parts by weight of at least on plasticizer **PL** per 100 parts by weight of organic polymer **P.** The composition may be formulated without plasticizer, but it is preferred that small amounts of plasticizer are used for ease of compounding and resulting application and mechanical properties.

The plasticizer **PL** may be any of the plasticizers commonly used in compositions based on silane-functional polymers. These include, for example, carboxylic esters such as phthalates and terephthalates, especially dioctyl phthalate, bis(2-ethylhexyl) phthalate, bis(3-propylheptyl) phthalate, diisononyl phthalate or diisodecyl phthalate, hydrogenated phthalates and/or hydrogenated terephthalates, diesters of ortho-cyclohexane-dicarboxylic acid, especially diisononyl 1,2-cyclohexanedicarboxylate, trimellitates, adipates, especially dioctyl adipate, bis(2-ethylhexyl) adipate, azelates, especially bis(2-ethylhexyl) azelate, sebacates, especially bis(2-ethylhexyl) sebacate or diisononyl sebacate, glycol ethers, glycol esters, organic phosphoric or sulfonic esters, sulfonamides, polybutenes, or fatty acid methyl or ethyl esters derived from natural fats or oils, also called "biodiesel"

Further suitable plasticizers **PL** are polymeric plasticizers. These have the advantage of lower migration tendency into surrounding areas and lower contribution to VOC levels.

The term "polymeric plasticizer" herein means a polymeric additive that is liquid at room temperature and contains no hydrolyzable silane groups. In contrast to traditional plasticizers, such as phthalates, the polymeric plasticizers generally have a higher molecular weight.

Preferably, the polymeric plasticizer has an average molecular weight Mₙ of 500 to 12'000 g/mol, in particular 1'000 to 10'000 g/mol, more preferably 2'500 to 5'000 g/mol.

Suitable polymeric plasticizers include polyols, such as those suitable for the production of the organic polymers **P** mentioned there, as long as they are liquid at room temperature, and polyols where the OH-groups have been reacted to chemically inert functional groups. Preferred polyols suitable as polymeric plasticizers include polyether polyols, polyester polyols, polyhydrocarbon polyols, polybutadiene polyols, and poly(meth)acrylate polyols. Particularly preferred are polyether polyols, especially those with an average molecular weight of Mₙ of 500 to 12'000 g/mol, especially 1'000 to 10'000 g/mol, more preferably 2'500 to 5'000 g/mol.

The composition according to the present invention preferably comprises 100 to 500 parts by weight of filler **F** per 100 parts of organic polymer **P.** Said filler **F** is selected from the list consisting of metal oxides, especially aluminium oxide, aluminium hydroxide, boron nitride, aluminium nitride, zinc oxide, silver, copper, aluminium, metal silicates, especially aluminosilicate, metal carbonates, chalk, especially natural, ground calcium carbonate (GCC) or precipitated calcium carbonates (PCC), optionally coated with fatty acids, especially stearic acid, graphite, and any mixture of these fillers.

The filler **F** should be in powder form or at least particulate, in order to ensure homogeneous compounding in its high amounts.

The moisture-curable composition may take the form of a one-component or of a multicomponent, especially two-component, composition.

In the present document, "one-component" refers to a composition in which all constituents of the composition are stored in a mixture in the same container and which is curable with moisture, in particular moisture from air humidity. In these cases, it is preferred that the filers are dried prior to formulating the composition to ensure sufficient storage stability.

In the present document, "two-component" refers to a composition in which the constituents of the composition are present in two different components which are stored in separate containers. Normally, the reactive species, i.e. polymer **P,** adhesion promoter **AP** and latent curing catalyst **C,** are stored in the first component, and water is present in the second component. Only shortly before or during the application of the composition are the two components mixed with one another, whereupon the mixed composition cures under the action of moisture from air humidity and/or from the second component. In the case of a two-component composition, it is still preferable to dry the filler **F** in the first component to ensure storage stability. The fillers **F** of the second component, however, do not have this restriction.

Advantages of a one-component formulation include an easier application process for the user with no mixing steps involved and no risk of mixing errors. Advantage of a two-component formulation include a generally higher storage stability, no requirement to dry the fillers **F** of the second component, and a faster, more homogeneous deep-curing behavior due to immediately present water within the mixture after mixing (no need for humidity to diffuse into the mixture).

In preferred embodiments of the moisture-curable composition according to the present invention, the composition consists of one component.

A particularly preferred embodiment of a moisture-curable composition according to the present invention consists of one-component comprising
- 100 parts by weight of said polymer **P;**
- 1 to 10 parts by weight of said adhesion promoter **AP;**
- 80 to 120 parts by weight of said plasticizer **PL;**
- 100 to 500 parts by weight of said filler **F,**
- 0.5 to 100 parts by weight of said catalyst **C** containing latent amine **A** and latent carboxylic acid **B.**

All the preferred embodiments described for the individual constituents, of above composition are the same as described in a more general manner further above in the description.

The present invention further provides the cured composition obtained from the moisture-curable composition after contact thereof with moisture.

The use of the composition gives rise to an article, object and part of an object respectively, that is bonded, coated or sealed with the composition. The article is especially an industrially manufactured good or a consumable good, especially a domestic appliance or a mode of transport such as, more particularly, an automobile, a bus, a truck, a rail vehicle, a ship, an aircraft, a drone, or a helicopter; or the article may be an installable component thereof.

In preferred embodiments the composition is preferably used as an adhesive or coating or sealant, in particular as construction sealant.

If required, the substrates can be pretreated prior to the application of the composition, especially by chemical and/or physical cleaning methods or by the application of an adhesion promoter, an adhesion promoter solution or a primer.

In general, it is not required to pre-treat the surfaces prior to application of the composition. The composition shows in preferred embodiments an excellent adhesion profile on a large variety of unprimed, non-pretreated, and even uncleaned materials. In other preferred embodiments, the composition shows good adhesion, but can be easily removed by pulling. These compositions preferably do not contain adhesion promoting organosilanes as described further above.

Another aspect of the present invention is the use of the composition for bonding, coating or sealing of at least one substrate.

Suitable substrates are especially
- glass, glass ceramic, screenprinted ceramic, concrete, mortar, cement screed, fiber cement, especially fiber cement boards, brick, tile, plaster, especially plasterboards or anhydride screed, or natural stone, such as granite or marble;
- metals or alloys, such as aluminum, copper, iron, steel, nonferrous metals, including surface-finished metals or alloys, such as zinc-plated or chromium-plated metals;
- plastics, in particular rigid or flexible polyvinyl chloride (PVC), polycarbonate (PC), polyamide (PA), polyesters, polymethyl methacrylate (PMMA), acrylonitrile butadiene styrene (ABS), styrene acrylonitrile (SAN), epoxy resins, phenolic resins, polyurethanes (PUR), polyoxymethylenes (POM), thermoplastic olefins (TPO), polyethylenes (PE), polypropylenes (PP), ethylene propylene rubber (EPM) or ethylene propylene diene monomer rubber (EPDM), where the surface of the plastics has optionally undergone plasma, corona or flame treatment;

- paints or varnishes, especially automotive topcoats; 30
- repair or leveling compounds based on PCC (polymer-modified cement mortar) or ECC (epoxy resin-modified cement mortar);
- asphalt or bitumen
- leather, textiles, paper, wood, wood-based materials bonded with resins such as phenolic, melamine or epoxy resins, resin-textile composites or other so-called polymer composites;
- insulation foams, especially made of expanded polystyrene (EPS), extruded polystyrene (XPS), PUR, polyisocyanurate (PIR), rock wool, glass wool or foamed glass.

It is possible to bond or seal two identical or two different substrates, especially the aforementioned substrates.

After the curing of the composition with water, especially in the form of air humidity, and/or with at least one suitable crosslinker, a cured composition is obtained.

The composition may comprise further constituents, especially the following auxiliaries and additives:
- additional desiccants or drying agents, especially orthoformic esters, calcium oxide or molecular sieves;
- additional plasticizers, especially reactive plasticizers in the form of monofunctional organic polymers or silanes, i.e. those that are silane-reactive only at one end;
- compatibilizers, such as polyether polyols;
- solvents;
- further inorganic or organic fillers, especially baryte (heavy spar), talcs, quartz flours, quartz sand, dolomites, wollastonites, kaolins, calcined kaolins, mica (potassium aluminum silicate), molecular sieves, magnesium hydroxide, silicas including finely divided silicas from pyrolysis processes, industrially produced carbon blacks, metal powders such as iron or steel, PVC powder or hollow spheres;
- fibers, especially glass fibers, carbon fibers, metal fibers, ceramic fibers or polymer fibers such as polyamide fibers or polyethylene fibers;
- dyes;
- pigments, especially titanium dioxide or iron oxides;
- rheology modifiers, in particular thickeners or thixotropy additives, especially sheet silicates such as bentonites, derivatives of castor oil, hydrogenated castor oil, polyamides, polyurethanes, urea compounds, fumed (pyrogenic) silicas, cellulose ethers or hydrophobically modified polyoxyethylenes;
- stabilizers against oxidation, heat, light or UV radiation;
- natural resins, fats or oils such as rosin, shellac, linseed oil, castor oil or soya oil;
- non-reactive polymers that are preferably solid at room temperature such as, in particular, homo- or copolymers of unsaturated monomers, especially from the group comprising ethylene, propylene, butylene, isobutylene, isoprene, vinyl acetate or alkyl (meth)acrylates, especially polyethylenes (PE), polypropylenes (PP), polyisobutylenes, ethylene-vinyl acetate copolymers (EVA) or atactic poly-α-olefins (APAO);
- flame-retardant substances, especially the already mentioned filler aluminum hydroxide, magnesium hydroxide, or, in particular, the already mentioned organic phosphoric esters such as, in particular, triethyl phosphate, tricresyl phosphate, triphenyl phosphate, diphenyl cresyl phosphate, isodecyl diphenyl phosphate, tris(1,3-dichloro-2-propyl) phosphate, tris(2-chloroethyl) phosphate, tris(2-ethylhexyl) phosphate, tris(chloroisopropyl) phosphate, tris(chloropropyl) phosphate, isopropylated triphenyl phosphate, mono-, bis- or tris(isopropylphenyl) phosphates of different degrees of isopropylation, resorcinol bis(diphenyl phosphate), bisphenol A bis(diphenyl phosphate) or ammonium polyphosphates;
- surface-active substances, especially leveling agents, deaerating agents or defoamers;
- biocides, especially algicides, fungicides or substances that inhibit fungal growth;
and other substances customarily used in curable compositions. It may be advisable to chemically or physically dry certain constituents before mixing them into the composition.

The inventive composition is with the exclusion of moisture storage-stable and readily processable.

### Examples

Adduced hereinafter are working examples which are intended to elucidate the invention described in detail. It will be appreciated that the invention is not restricted to these described working examples.

The term "standard climatic conditions" or "standard climate" refers to a temperature of 23±1°C and a relative air humidity (RH) of 50±5%.

### Test methods for exemplary compositions:

**Skin time** was determined by the following method. Each curable composition was poured into a bead shape approximately 20 mm wide x 100 mm long x 10 mm high on a slate board and was left to stand in an environment of 23°C and 50% RH. A polyethylene film having a thickness of 0.1 mm was brought into contact with the surface of each composition. The time until the composition did not adhere to the polyethylene film was measured.

**Curability** was determined by the following method and categorized as follows: The surface curability of the curable compositions was checked by skin time measurement method after 24 hours at 23 °C and 50% RH.
Cured (c.): The composition did not adhere to the polyethylene film.
Not cured (n.c.): The composition adhered to the polyethylene film.

The initial **Viscosity** of each curable composition was determined using a BS type viscometer (manufactured by Toki Sangyo Co., Ltd.) and a No. 7 rotor at 23°C with a rotational speed of 10 rpm after each curable composition was kneaded and left at 23°C for 1 day.

The **tensile strength,** the **elongation at break,** the **modulus of elasticity** at 150% elongation (tensile speed: 50 mm/min), and **failure mode** were determined by measuring a tensile stress of a cured product of each curable composition. The measurement of the tensile stresses was performed according to JIS A 1439:2010. That is, a primer (trade name "Primer No. 40", manufactured by Sika Japan.) was applied onto an anodized aluminum plate to prepare an H-shaped test piece. Each curable composition was poured onto the test piece. The 150% tensile stress (M150) [N/mm2] of each cured product was measured at 23°C after each composition was cured for 7 days at 23°C and 7 days at 30°C, cured for 7 days at 23°C, 7 days at 30°C and 7 days at 80°C.

**Failure mode** was determined according to JIS A 1439 on test specimens anodized aluminum. The specimens were then observed by eye and the failure mode was categorized as follows:
- TCF:: Thin layer cohesive failure
- CF:: Cohesive failure
- AF:: Adhesive failure

### Compounds used in compositions

**Table 1: Compounds used for the example compositions**

| **Name** | | **Description** | **Trade Name** |
|---|---|---|---|
| Plasticizer **PL** | | Diisononyl phthalate (DINP) | J-PLUS Co., Ltd. |
| Filler **F** | PCC | Precipitated calcium carbonate | Kalfaine 200 (Maruo Calcium Co., Ltd.) |
| | GCC | Ground calcium carbonate | Snowlite S (Maruo Calcium Co., Ltd.) |
| Adhesion promoter **AP** | | 3-Glycidoxypropyl trimethoxysilane | KBM403 (Shin-Etsu Chemical Co., Ltd.) |
| Drying agent | | Vinyltrimethoxy silane | Silquest A-171^{™} (Momentive) |
| Compatibilizer | Polyether polyol | Excenol 3020 (AGC Chemicals) | |
| Tin Catalyst | Sn⁴⁺ catalyst | Excestar C-201 | |

### Synthesis of organic polymer P

Under moisture exclusion, 1'000 g polyoxypropylene diol (Polyol Acclaim^{®} 12200 from Covestro, MW = 10'000 g/mol, OH number 11.2 mg KOH/g), 35.2 g isophorone diisocyanate (Vestanat^{®} IPDI from Evonik Industries), 122.5 g diisodecyl phthalate (DIDP) and 0.12 g dibutyltin dilaurate (DBTL) were heated to 90°C with constant stirring and left at this temperature to give a polyurethan prepolymer terminated by isocyanate groups with the titrimetrically determined content of free isocyanate groups of 0.39 wt.-%. Subsequently, 36.9 g of diethyl N-(3-trimethoxysilylpropyl)aminosuccinate
was added to the reaction vessel. The total consumption of the isocyanate groups was checked by IR spectroscopy. The silane-functional polymer was cooled to room temperature and stored under exclusion of moisture.

### Synthesis of latent amine A

### Latent amine A1

50.00 g of 2,2-dimethyl-3-lauroyloxypropanal was placed in a round bottom flask under a nitrogen atmosphere. Under stirring, 13.93 g of 3-aminomethyl-3,5,5-trimethylcyclohexylamine was added and then the volatile components were removed at 80 °C and 10 mbar vacuum. A pale yellow liquid with an amine value of 153.0 mg KOH/g was obtained as N,N'-Bis(2,2-dimethyl-3-lauroyloxypropylidene)-3-aminomethyl-3,5,5-trimethylcyclohexylamine

### Latent amine A2

435 g of diethanolamine (MW = 105 g/mol) and 183 g of toluene were poured into a reaction vessel equipped with a stirrer, thermometer, ester tube, and heating/cooling device. 328 g of isobutyl aldehyde (MW = 72.1 g/mol) was added to the reaction vessel while stirring them. Then, the mixture was heated to carry out a reflux dehydration reaction at 110°C to 150°C for 3 hours while removing by-product water from the reaction vessel. The amount of the removed water was 74.5 g. Then, the mixture was heated while reducing pressure from 50 hPa to 70 hPa to remove toluene and unreacted isobutyl aldehyde so as to obtain 2-isopropyl-3-(2-hydroxyethyl) oxazolidine, which is an intermediate reaction product. 348 g of hexamethylene diisocyanate (MW = 168) was further added to 659 g of the obtained 2-isopropyl-3-(2-hydroxyethyl) oxazolidine to react them at 80° C for 8 hours. The time when the measured NCO content by titration became 0.0% by mass was regarded as the end point of the reaction. Thereby, a urethane bond-containing oxazolidine compound having a urethane bond and two oxazolidine rings in the molecule was obtained. The obtained urethane bond-containing oxazolidine compound was a translucent liquid at room temperature.

### Synthesis of latent carboxylic acid B

The synthesis of latent carboxylic acid **B** was performed according to the state of the art as described in patent JP4878880B2 (tab. 1-IV, p. 25) and will be summarized thereafter. The latent carboxylic acid **B** was prepared from the following raw materials in parts by mass:
To 222 parts of stearic acid and 154 parts of lauric acid, toluene was added to achieve a concentration of 50% by mass. Then, 23.4 parts of an allyl group-terminated polyether (Unisafe PKA5015, NOF Corporation) and platinum chloride at a concentration of 3% by mass in isopropyl alcohol was added. The solution was heated to 80°C. Then, 100 parts of Si-H group-containing polysiloxane (KF99, Shin-Etsu Chemical) was slowly added dropwise. After completion of the dropwise addition, the reaction temperature was raised to 90°C and the mixture was stirred until generation of hydrogen was no longer observed. Thereafter, by distilling off toluene, the polysiloxane representing the latent carboxylic acid **B** was obtained.

### Compositions and tests

Comparative reference examples are identified in Tables 2 to 5 by "(Ref.)".

Table 2 to 3 show compositions for curability tests. The combination of latent amine **A** and latent carboxylic acid **B** can provide curability similar to the current state of the art using tin catalysts. It also shows that latent amine **A** can consist of imines **A1** or oxazolidines **A2.**

Table 4 to 5 show the composition and material tests of filled compositions. Inventive examples using a combination of latent amine **A** and latent carboxylic acid **B** can provide cured materials that have similar or enhanced properties compared to the state of the art using tin catalysts. Especially the storage stability (as shown with the skin time after storage at 70°C for 24 hours) is improved in the inventive example.

### Compositions for curability tests

**Table 2: Compositions used in material tests. Values are in mass ratio.**

| **Examplary compositions** | | **E1** (Ref.) | **E2** (Ref.) | **E3** (Ref.) | **E4** (Ref.) | **E5** | **E6** | **E7** |
|---|---|---|---|---|---|---|---|---|
| Polymer **P** | | 20 | 20 | 20 | 20 | 20 | 20 | 20 |
| Tin Catalyst | | 0.2 | - | - | - | - | - | - |
| Latent Amine **A** | **A1** | - | 0.31 | - | - | 0.31 | - | 2.0 |
| | **A2** | - | - | - | 0.33 | - | 0.33 | - |
| Latent Acid **B** | | - | - | 0.44 | - | 0.44 | 0.88 | 1.0 |

### Curability tests

**Table 3: Preliminary curability tests. "c." means "cured", "n.c." means "not cured" after 1 day storage at 23°C (with 50% relative humidity)**

| **Test results** | | **E1** (Ref.) | **E2** (Ref.) | **E3** (Ref.) | **E4** (Ref.) | **E5** | **E6** | **E7** |
|---|---|---|---|---|---|---|---|---|
| Curability | 23°C 1d | c. | n.c. | n.c. | n.c. | c. | c. | c. |

### Compositions for material tests

**Table 4: Compositions used in material tests. Values are in wt.-% totaling 100%.**

| **Exemplary compositions** | | **E8** (Ref.) | **E9** |
|---|---|---|---|
| Polymer **P** | | 20 | 20 |
| Plasticizer **PL** | | 21 | 21 |
| Filler **F** | GCC | 41.0 | 33.6 |
| | PCC | 15.6 | 14.2 |
| Adhesion promoter **AP** | | 0.5 | 0.5 |
| Drying agent | | 0.4 | 0.4 |
| Compatibilizer | | 1.3 | 1.3 |
| Tin Catalyst | | 0.2 | - |
| Latent Amine A | | - | 6 |
| Latent Acid B | | - | 3 |

### Material tests

**Table 5: Material Tests**

| **Test results** | | **E8** (Ref.) | **E9** |
|---|---|---|---|
| Skin time | 23°C initial | 1h 40 min | 3h 10 min |
| | 70°C 24h | 9h | 2h 10 min |
| Viscosity (Pa.s) | 23°C initial | 318 | 218 |
| E modulus 150% (MPa) | 23°C 7d, 30°C 7d | 0.27 | 0.08 |
| | 80°C 7d | 0.19 | 0.05 |
| Tensile Strength (MPa) | 23°C 7d, 30°C 7d | 0.82 | 0.58 |
| | 80°C 7d | 0.55 | 0.27 |
| Elongation at break (%) | 23°C 7d, 30°C 7d | 862 | 855 |
| | 80°C 7d | 720 | 611 |
| Failure Mode | 23°C 7d, 30°C 7d | TCF100 | TCF100 |
| | 80°C 7d | CF10 TCF90 | CF100 |

## Claims

1. A moisture-curable composition comprising
- at least one organic polymer **P** containing **P'** moles of reactive silane groups;
- preferably at least one adhesion promoter **AP;**
- preferably at least one plasticizer **PL;**
- preferably at least one filler **F;**
- optionally additives;
- a latent curing catalyst **C** consisting of
a) at least one latent amine **A** releasing **A'** moles of free amine groups upon contact with moisture;
b) at least one latent carboxylic acid **B** releasing **B'** moles of free carboxylic acid groups upon contact with moisture;

2. The composition according to claim 1, **characterized in that** the latent curing catalyst **C** containing latent amine **A** and latent carboxylic acid **B** wherein the molar ratio of **A':P'** preferably ranges from 0.5:1 to 10:1; wherein the molar ratio of **B':P'** preferably ranges from 0.5:1 to 10:1.

3. The composition according to claim 1 to 2, **characterized in that** the organic polymer **P** has reactive silane groups of the formula (I) 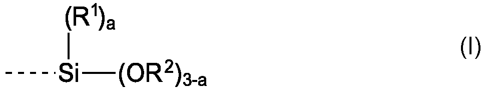 wherein
R¹ represents a linear or branched, monovalent hydrocarbon radical having 1 to 8 carbon atoms and which optionally contains one or more C-C multiple bonds, and/or cycloaliphatic moieties, and/or aromatic moieties;
R² represents a linear or branched, monovalent hydrocarbon radical having 1 to 5 carbon atoms and which optionally contains one or more C-C multiple bonds, and/or cycloaliphatic moieties, and/or aromatic moieties;
a has a value of 0 or 1, especially 0.

4. The composition according to claims 1 and 3, **characterized in that** the backbone of said organic polymer **P** is a polycarbonate, a polyester or a polyether, in particular a polyoxyethylene, polyoxypropylene or polyoxy-propylenepolyoxyethylene, a polyurethane, a poly(meth)acrylate or a polybutadiene.

5. The composition according to claims 1 to 4, **characterized in that** said organic polymer **P** has an average of 1.5 to 4, more preferably 1.8 to 3.4, most preferably 2 to 3, reactive silane groups per molecule.

6. The composition according to claims 1 to 5, wherein said adhesion promoter **AP** is according to formula (II) 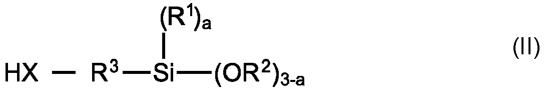 wherein
R¹ represents a linear or branched, monovalent hydrocarbon radical having 1 to 8 carbon atoms and which optionally contains one or more C-C multiple bonds, and/or cycloaliphatic moieties, and/or aromatic moieties, especially a methyl or ethyl group;
R² represents a linear or branched, monovalent hydrocarbon radical having 1 to 5 carbon atoms and which optionally contains one or more C-C multiple bonds, and/or cycloaliphatic moieties, and/or aromatic moieties, especially a methyl or ethyl or isopropyl group;
R³ represents a divalent hydrocarbyl radical having 1 to 12 carbon atoms that optionally has cycloaliphatic and/or aromatic moieties and optionally one or more heteroatoms and optionally one or more C-C multiple bonds, especially an amido, carbamate or morpholino group;
X is O, S or NR⁴ where R⁴ is H or a monovalent hydrocarbyl radical having 1 to 20 carbon atoms that optionally has heteroatoms in the form of alkoxysilyl, ether or carboxylic ester groups;
a has a value of 0 or 1 or 2, especially 0.

7. The composition according to claims 1 to 6, wherein said plasticizer **PL** comprises or consists of carboxylic esters, such as phthalates and/or terephthalates, hydrogenated phthalates and/or hydrogenated terephthalates, trimellitates, adipates, azelates, sebacates, benzoates, glycol ethers, glycol esters, polyols, especially polyether polyols.

8. The composition according to claims 1 to 7, wherein said filler **F** comprises or consists of metal oxide, metal silicates, metal carbonates, in particular calcium carbonates such as ground calcium carbonates (GCC) and/or precipitated calcium carbonates (PCC).

9. The composition according to claims 1 to 8, wherein the composition is free of tin catalysts.

10. The composition according to claims 1 to 9, wherein said latent carboxylic acid **B** is a polysiloxane according to formula (Va) 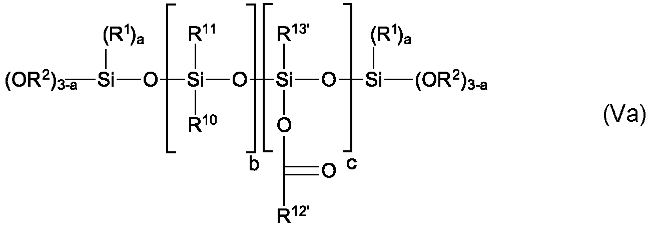 wherein
R¹ represents a linear or branched, monovalent hydrocarbon radical having 1 to 8 carbon atoms and which optionally contains one or more C-C multiple bonds, and/or cycloaliphatic moieties, and/or aromatic moieties, especially a methyl or ethyl group;
R² represents a linear or branched, monovalent hydrocarbon radical having 1 to 5 carbon atoms and which optionally contains one or more C-C multiple bonds, and/or cycloaliphatic moieties, and/or aromatic moieties, especially a methyl or ethyl or isopropyl group;
R¹⁰ represents a linear or branched, monovalent hydrocarbon radical or a polycarbonate, polyester or polyether chain and which optionally contains one or more C-C multiple bonds, and/or cycloaliphatic moieties, and/or aromatic moieties, and optionally one or more heteroatoms, preferably ether oxygens, especially a polyether or methyl group;
R¹¹ represents a linear monovalent hydrocarbon radical having 1 to 5 carbon atoms, preferably a methyl group;
R^{12'} represents an a linear or branched, monovalent hydrocarbon radical having 1 to 25 carbon atoms, preferably 13 to 21 carbon atoms, preferably 13 to 17 carbon atoms and/or cycloaliphatic moieties, and/or aromatic moieties, and optionally one or more heteroatoms, examples include phenyl, tolyl, benzyl, and styryl, n-tridecyl, n-tetradecyl, n-pentadecyl, n-hexadecyl, n-heptadecyl, n-octadecyl, n-pentyl, 1-methylbutyl, 2-methylbutyl, 3-methylbutyl group, tert-pentyl., neopentyl, n-hexyl, 1-methylpentyl, 2-methylpentyl, 3-methylpentyl, 4-methylpentyl, 1-ethylbutyl, 2-ethylbutyl, 3-ethylbutyl, 2-dimethylbutyl, 3,3-dimethylbutyl, 2,3-dimethylbutyl, n-heptyl, 1-methylhexyl, 2-methylhexyl, 3-methylhexyl, 4 -methylhexyl, 5-methylhexyl, 1-ethylpentyl, 2,2-dimethylpentyl, 3,3-dimethylpentyl, 2,3-dimethylpentyl, 2,4-dimethylpentyl, 2-ethylpentyl, 3-ethylpentyl, 2,2,3-trimethylbutyl, n-octyl, n-nonyl, n-undecyl, 1-ethylpentyl, preferably n-undecyl.
R^{13'} represents a hydrogen atom or a linear monovalent hydrocarbon radical having 1 to 8 carbon atoms, preferably 1 to 5 carbon atoms and/or cycloaliphatic moieties, and/or aromatic moieties, and optionally one or more heteroatoms, examples include phenyl, tolyl, benzyl, and styryl; methyl, ethyl, n-propyl, n-butyl and n-octyl, preferably phenyl and methyl. a has a value of 3;
b has a value of 0 to 5, preferably 0 to 2;
c has a value of 1 to 40.

11. The composition according to claims 1 to 10, wherein said latent amine **A** contains an imine structure according to formula (III) 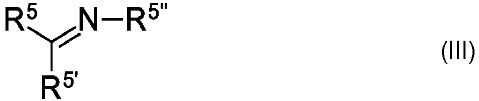 wherein
R⁵ represents a linear or branched or cyclic, monovalent hydrocarbon radical having 1 to 18 carbon atoms that optionally has cycloaliphatic and/or aromatic moieties and optionally one or more C-C multiple bonds and one or more heteroatoms, especially a carboxylic ester group and/or morpholine group;
R^{5'} represents a hydrogen or a linear or branched or cyclic, monovalent hydrocarbon radical having 1 to 5 carbon atoms that optionally has cycloaliphatic and/or aromatic moieties and optionally one or more C-C multiple bonds and one or more heteroatoms, preferably CH₃ or H, especially H.
R^{5"} represents a linear or branched or cyclic, monovalent hydrocarbon radical having 1 to 25 carbon atoms that optionally has cycloaliphatic and/or aromatic moieties and optionally one or more C-C multiple bonds and one or more heteroatoms and optionally carries one or more additional imine groups.

12. The composition according to claims 1 to 10, wherein said latent amine **A** is an oxazolidine structure according to formula (IV) 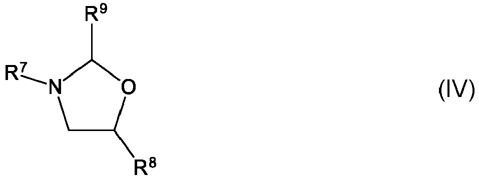 wherein
R⁷ represents a linear or branched or cyclic, monovalent hydrocarbon radical having 1 to 12 carbon atoms that optionally has cycloaliphatic and/or aromatic moieties and optionally one or more C-C multiple bonds and/or one or more heteroatoms such as O, S or N and/or one or more functional groups such as urethane groups, urea groups, thiourethane groups or polycarbonates or polyester, especially methyl, methylol, ethyl, ethylol, n-propyl, n-butyl, n-hexyl, cyclohexyl, 2-ethylhexyl or benzyl and optionally carries one or more additional oxazolidine groups;
R⁸ represents a H;
R⁹ represents a linear or branched or cyclic, monovalent hydrocarbon radical having 1 to 12 carbon atoms that optionally has cycloaliphatic and/or aromatic moieties and optionally one or more C-C multiple bonds and one or more heteroatoms, especially H, methyl, ethyl, n-propyl, n-butyl, n-hexyl, cyclohexyl, 2-ethylhexyl, benzyl, furan-2-yl, 1,3-benzodioxol-5-yl or 1-naphthyl.

13. The moisture-curable composition, according to the claims 1 to 10 **characterized in that** said composition consists of one-component comprising
- 100 parts by weight of said polymer **P;**
- 1 to 10 parts by weight of said adhesion promoter **AP;**
- 80 to 120 parts by weight of said plasticizer **PL;**
- 100 to 500 parts by weight of said filler **F,**
- 0.5 to 100 parts by weight of said catalyst **C** containing latent amine **A** and latent carboxylic acid **B.**

14. A cured composition obtained from the moisture-curable composition according to claims 1 to 10 after contact thereof with moisture.

15. Use of a composition according to claim 1 to 10 as adhesive or coating or sealant, in particular as construction sealant.
